# EUROPEAN PATENT APPLICATION

(11) **EP 2 477 378 A1**
(43) Date of publication of application: **18.07.2012**
(21) Application number: 12150591.1
(22) Date of filing: 10.01.2012
(51) Int. Cl.: H04L 29/08

(54) **Method of controlling a network apparatus**

(30) Priority: 12.01.2011 KR 20110003163
(71) Applicant: LG Electronics, Inc., Yongdungpo-gu Seoul 150-721 (KR)
(72) Inventor: Eun, Yousook, 153-802 Seoul (KR); Kim, Hyunjung, 153-802 Seoul (KR); Lee, Youjin, 153-802 Seoul (KR); Jung, Mijin, 153-802 Seoul (KR)
(74) Representative: Vossius & Partner

(57) **Abstract**

Provided is a method of controlling a network apparatus which comprises a portable device, and an air conditioner capable of communicating with the portable device. According to an aspect of the present invention, the method comprises acquiring environment-related information; inputting a command for operating the air conditioner according to the acquired environment-related information; and operating the air conditioner according to the environment-related information.

## Description

The present disclosure relates to a method of controlling a network apparatus.

In general, an air conditioner is a household appliance supplying hot or cold wind into an indoor space by means of refrigerant cycle operation.

Recently, a number of portable devices such as smart phones are available. Those devices support Internet connection as well as phone communication, and enable document programs, game programs, document files and so forth to be downloaded and run.

Also, home network systems are introduced these days to general households so that electronics goods including household appliances can be controlled by those portable devices.

The present invention provides a a method of controlling a network apparatus according to claim 1. Preferred embodiments are defined in the dependent claims. Embodiments provide a method of controlling a network apparatus to enable a remote controlling of an air conditioner based on a portable device such as a smart phone.

Embodiments also provide a method of controlling a network apparatus to operate the air conditioner in indoor or outdoor environmental conditions of a certain area.

The technical objects of the present disclosure are not limited to the aforesaid, but other technical objects not described herein will be clearly understood by those skilled in the art from descriptions below.

According to an aspect of the present invention, the method comprises acquiring environment-related information; inputting a command for operating the air conditioner according to the acquired environment-related information; and operating the air conditioner according to the environment-related information.

The details of one or more embodiments are set forth in the accompanying drawings and the description below. Other features will be apparent from the description and drawings, and from the claims.

Fig. 1 is a perspective view of a network apparatus according to an embodiment.

Fig. 2 is a structural block diagram of a network apparatus according to an embodiment.

Fig. 3 is a flow chart illustrating a first example of a networks apparatus of the present invention.

Fig. 4 is a flow chart illustrating a second example of a networks apparatus of the present invention.

Fig. 5 is a flow chart illustrating a third example of a networks apparatus of the present invention.

Reference will now be made in detail to the embodiments of the present disclosure, examples of which are illustrated in the accompanying drawings.

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the scope of the invention. To avoid detail not necessary to enable those skilled in the art to practice the invention, the description may omit certain information known to those skilled in the art. The following detailed description is, therefore, not to be taken in a limiting sense, and the scope of the present invention is defined only by the appended claims.

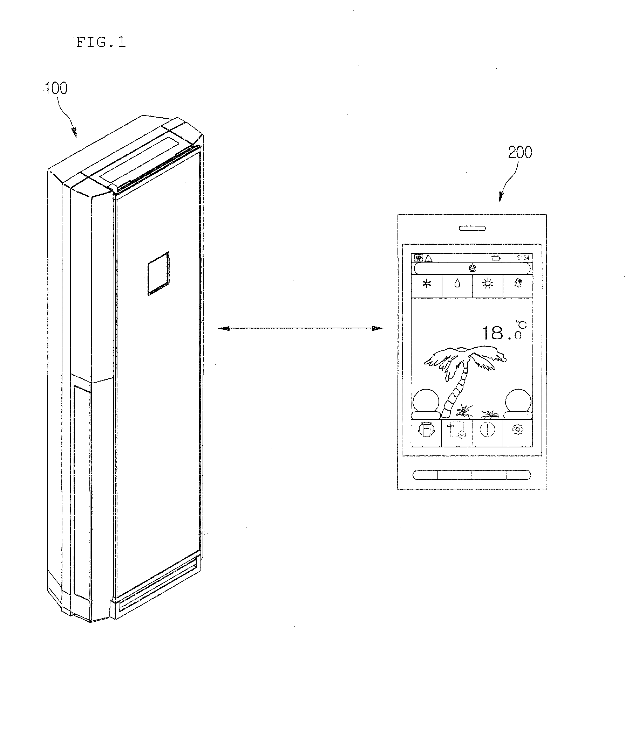

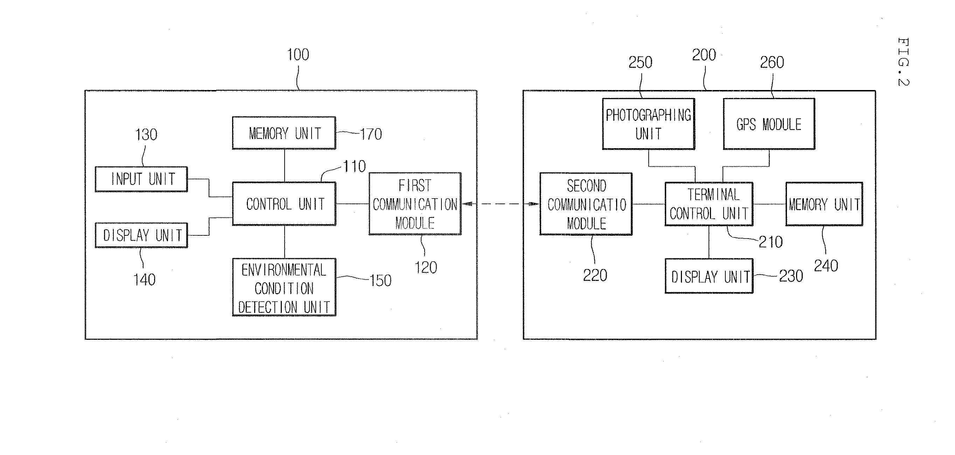

Fig. 1 is a perspective view of a network apparatus according to an embodiment, and Fig. 2 is a structural block diagram of a network apparatus according to an embodiment.

With reference to Figs. 1 and 2, a network apparatus of an embodiment of the present invention includes an air conditioner 100 supplying cold or hot wind into an indoor space, and a portable terminal 200 (hereinafter referred to as "terminal") communicating with the air conditioner 100. In the present invention, the air conditioner may be considered to include an indoor unit and an outdoor unit although only an indoor unit is illustrated in Fig. 1.

The terminal 200 may control an operation of the air conditioner 100 remotely, and transmit information to or receive information from the air conditioner 100. The terminal may allow voice or video communication, and transmit certain data to or receive certain data from another terminal. The terminal 200 may be a smart phone, but is not limited thereto.

The air conditioner 100 includes a control unit 110 controlling the operation of the air conditioner 100, a first communication module 120 communicating with the terminal 200, an input unit 130 for inputting an operation condition and the like of the air conditioner 100, a display unit 140 displaying operation information and the like, an environmental condition detection unit 150 for detecting an environmental condition the air conditioner 100 is in, and a memory unit 170 where various information is saved.

Due to the environmental condition detection unit 150, the control unit 110 may detect at least one of such factors as temperature, humidity, wind speed, wind direction, and cleanliness of a space the air conditioner 100 is located in. The environmental condition detection unit 150 may include at least one sensor to detect at least one of the temperature, humidity, and cleanliness factors. By using information about a speed or direction of the wind discharged from the air conditioner 100, the control unit 110 may detect the wind speed or the wind direction. The environmental condition detection unit 150 may include a sensor for detecting the wind speed or the wind direction, and the control unit 110 may discern the wind direction or the wind speed in the space where the air conditioner 100 is located by using the wind direction or speed information detected. A specific type or a detection method of the environmental condition detection unit 150 is not limited herein.

The terminal 200 may include a terminal control unit 210, a second communication module 220 communicating with the first communication module 120, a display unit 230 displaying at least information related to the air conditioner 100, a memory unit 240 where various information is saved, an photographing unit 250 for image capturing, and a global positioning system (GPS) module 260 checking a location of the terminal 200.

The first communication module 120 and the second communication module 220 may be wireless fidelity (WiFi) modules, Bluetooth modules, or Zigbee modules, but are not limited thereto.

The first communication module 120 and the second communication module 220 may communicate with each other directly, or, although not illustrated herein, may communicate with each other via a router (access point). In other words, the communication may be made directly without having to go through a wireless router by using WiFi-Direct technology or an Ad-Hoc mode (or Ad-Hoc network). WiFi-Direct is defined as a high-speed communication technology using a communication protocol such as 802.11a, b, g, and n, and has nothing to do with whether the router is installed or not. In other words, the terminal 200 and the air conditioner 100 may wirelessly communicate with each other even without the router. The communication technology, which is in an increasing demand these days, allows a WiFi-based connection between the air conditioner 100 and the terminal 200 even when no Internet network is available.

The Ad-Hoc mode (or Ad-Hoc network) is a communication network including nothing but a mobile host and having no fixed wired network. Network configuration is made economical and swift because movement of the host is unrestricted, and no wired network and base station is required. Therefore, in the Ad-Hoc mode, the terminal 200 and the air conditioner 100 may communicate with each other wirelessly even without the router.

Bluetooth communication is a near field communication (NFC) method already widely known. Through a pairing process between the Bluetooth modules built inside the terminal 200 and the air conditioner 100, wireless communication is made possible within a certain range.

Assuming that the air conditioner 100 and the terminal 200 use WiFi modules for wireless router-based communication, communication becomes available between the modules once a registration is completed between the terminal 200 and the air conditioner 100.

Assuming that the terminal 200 uses the WiFi module for wireless router- and a server-based communication, communication becomes available between the modules via the server once information about the terminal 200 and the air conditioner is registered on the server.

Once the registration (matching process for two-way data transmission and reception) between the terminal 200 and the air conditioner 100 is completed, the terminal 200 may control the operation of the air conditioner 100, and receive certain information from the air conditioner 100. The certain information may include at least information about the operation of the air conditioner 100, and information detected by the environmental condition detection unit 150.

The terminal 200 may be connected to the Internet or a Web server, and download certain information from outside. The downloadable information may include information about a specific environmental condition.

The terminal 200 may download an air conditioner control program (e.g., application), and control the operation of and communicate information with the air conditioner 100 after executing the control program. In other words, the terminal 200 may communicate information with the air conditioner 100, or communicate information with the Web server or another terminal.

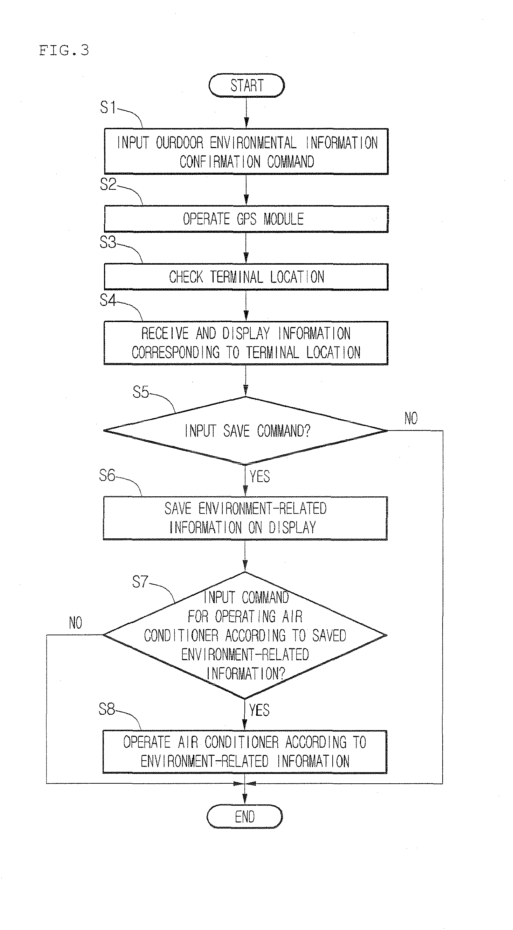

Fig. 3 is a flow chart illustrating a first example of a networks apparatus of the present invention.

With reference to Fig. 3, a confirmation command about outdoor environmental information may be input (S1). The outdoor environmental information may be information about an environmental condition of an area where the terminal 200 is located. For example, when a certain environmental condition is preferred and the condition is desired to be maintained in an indoor space, the confirmation command about the outdoor environmental information may be input into the terminal 200. Here, the outdoor environmental information may be at least one of temperature, humidity, wind direction, wind speed, cleanliness, yellow dust condition, and the like, but the type is not limited thereto.

For example, the confirmation command about the outdoor environmental information may be input by selecting a certain button after executing the control program of the terminal 200. For another example, the confirmation command about the outdoor environmental information may be input by capturing an external environment or a person with the photographing unit 250 after executing the control program of the terminal 200. The confirmation command about the outdoor environmental information may be input by finishing the capturing with the photographing unit 250, but the method of inputting the confirmation command about the outdoor environmental information is not limited thereto.

When the confirmation command about the outdoor environmental information is input into the terminal 200, the GPS module 260 of the terminal 200 is activated (S2). When the GPS module 260 is activated, a current location of the terminal 200 is checked (S3).

When the current location of the terminal 200 is checked, the terminal 200 accesses the Internet or the Web server to receive information about an outdoor environment (hereinafter referred to as "environment-related information") corresponding to the location of the terminal 200 (S4). The environment-related information received may be displayed at the display unit 230 of the terminal 200 (S4). The environment-related information in the present invention may be the outdoor environmental information itself, or a condition for operating the air conditioner 100 (e.g. method of operating a compressor, a heat exchanger, or a fan) for satisfying the outdoor environmental information.

As another method of receiving the environment-related information, the Internet or the Web server may be accessed through the terminal 200, and a desired location may be selected on the Internet or the Web server to receive the environment-related information of the selected area.

After the terminal 200 receiving the environment-related information, whether a save command for saving the received information is input is judged (S5). Assuming the save command is input, the environment-related information received is saved in the memory unit 240 of the terminal 200 (S6).

For another example, the environment-related information may be received by the terminal 200 and saved in the memory unit 240 at the same time. In the present invention, at least one piece of environment-related information may be saved in the memory unit 240. The at least one piece of environment-related information saved in the memory unit 240 may be displayed at the display unit 230 of the terminal 200 through user selection. The environment-related information displayed at the display unit 230 of the terminal 200 may be the environmental information itself.

When information about a plurality of environments is saved in the memory unit 240, the information about the environments may be displayed at the display unit 230 in a list form.

Then, the terminal 200 judges whether a command for operating the air conditioner according to the environment-related information saved in the memory unit 240 is input (S7). One of the at least one piece of the environment-related information saved in the memory unit 240 may be selected.

Assuming that the command for operating the air conditioner according to the saved environment-related information is input (environment-related information is selected), the air conditioner 100 receives the selected environment-related information from the terminal 200, and is operated according to the received environment-related information (S8). For example, when the environment-related information includes a 25°C temperature, a 40% humidity, and a 0.5m/s wind speed, the air conditioner is operated to meet the 25°C temperature, the 40% humidity, and the 0. 5m/s wind speed. Here, the air conditioner 100 may save the environment-related information. Then, user selection of the environment-related information may be made through the input unit 130 of the air conditioner.

Here, when the one piece of environment-related information is saved in the memory unit 240, the environment-related information may be transmitted to the air conditioner 100 by selecting a shortcut button disposed at the terminal 200. For another example, when the shortcut button disposed at the terminal 200 is selected, at least one piece of environment-related information is displayed. When user selection is made for a desired environment-related information, the selected environment-related information may be transmitted to the air conditioner 100.

According to the present invention, an outdoor environment condition which is felt fresh may be maintained indoors, and thus user comfort may increase to suit a certain preference.

Also, since the environment-related information may be transmitted from the terminal to the air conditioner for the air conditioner to be operated to meet the received environment-related information, user convenience may increase in terms of operability.

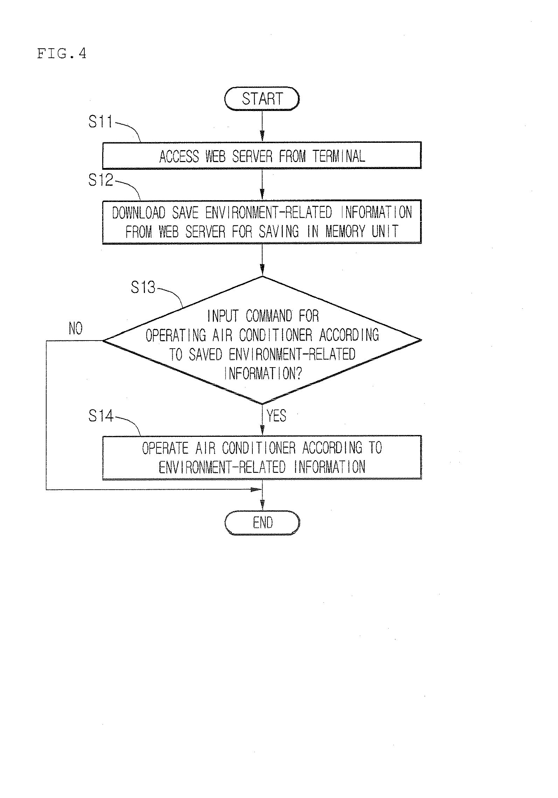

Fig. 4 is a flow chart illustrating a second example of a networks apparatus of the present invention.

With reference to Fig. 4, the Web server may be accessed through the terminal 200 (S11), and environment-related information may be downloaded from the Web server and saved in the memory unit 240 of the terminal 200 (S12).

In the present invention, the environment-related information downloadable from the Web server may include actual outdoor environment information of a certain area, and indoor environment information which may be maintained when the air conditioner is operated at a certain condition. Here, the environment-related information may be uploaded to the Web server by a user of the terminal 200, a manufacturer of the air conditioner, etc. For example, the air conditioner manufacturer may upload environment-related information for discharging mosquito-repellant wind, environment-related information for operating the air conditioner in a heavy yellow dust area, etc. For another example, an Alaskan may upload information about a local environmental condition, and a person dwelling in a hot region may download the information about the environmental condition in Alaska.

Next, the terminal 200 judges whether the command for operating the air conditioner according to the environment-related information saved in the memory unit 240 is input (S13). One of the at least one piece of the environment-related information saved in the memory unit 240 may be selected.

Assuming that the command for operating the air conditioner according to the saved environment-related information is input (environment-related information is selected), the air conditioner 100 receives the selected environment-related information from the terminal 200, and is operated according to the received environment-related information (S14). Here, the air conditioner may save the environment-related information. Then, user selection of the environment-related information may be made through the input unit 130 of the air conditioner.

According to the present invention, an outdoor or indoor environment condition which is felt fresh by at least two persons may be maintained indoors at a residential space of another person.

Also, indoor comfort may increase and the air conditioner may be operated in various conditions because the environment-related information for a certain purpose (mosquito repelling, etc.) or the environment-related information needed in a certain area (heavy yellow dust area) may be downloaded from the Web server.

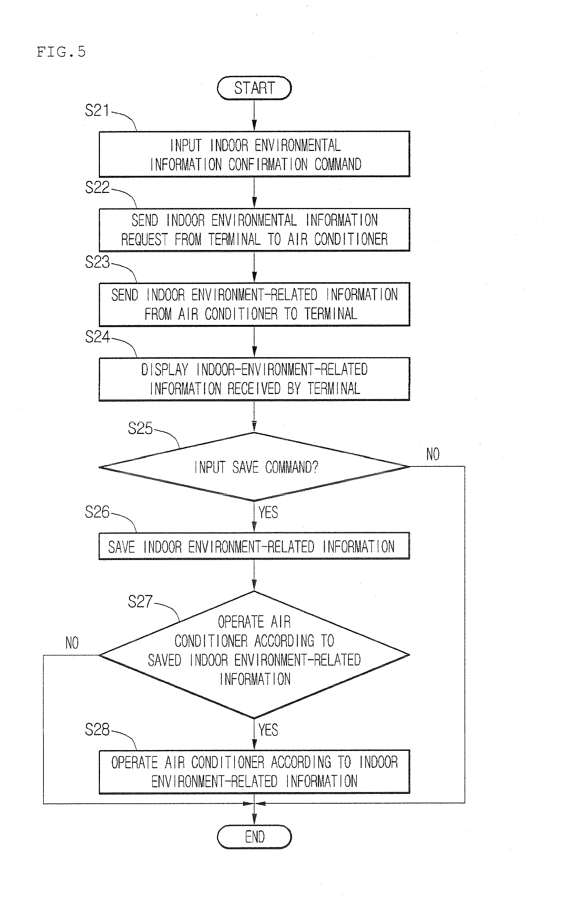

Fig. 5 is a flow chart illustrating a third example of a networks apparatus of the present invention.

With reference to Fig. 5, a confirmation command about indoor environmental information may be input into the terminal 200 (S21). The confirmation command about indoor environmental condition may be input by selecting a certain button after executing a control program of the terminal 200. For another example, the confirmation command about indoor environmental condition may be input by capturing the air conditioner 100 with the photographing unit 250 after executing the control program of the terminal 200. In the present invention, the method of inputting the confirmation command about indoor environmental information is not limited thereto.

When the confirmation command is input into the terminal 200, the terminal 200 sends a confirmation request to the air conditioner 100 (S22).

Then, the air conditioner 100 detects the indoor environmental information of an indoor place where the air conditioner 100 is located by using the environmental condition detection unit 150. Then, the air conditioner 100 transmits the detected indoor environmental information to the terminal 200 (S23). At the terminal 200, the received indoor environmental information is displayed (S24).

In the present invention, the indoor environmental information may be the indoor environmental information itself of the indoor place where the air conditioner is located, or a condition for operating the air conditioner 100 (e.g. method of operating a compressor, a heat exchanger, or a fan) for satisfying (or responding to) the indoor environmental information.

After the terminal. 200 receiving the indoor environmental information, whether a save command for saving the received information is input is judged (S25). Assuming that the save command is input, the received indoor environmental information is saved in the memory unit 240 of the terminal 200 (S26).

For another example, the environment-related information may be received by the terminal 200 and saved in the memory unit 240 at the same time.

Next, the terminal 200 judges whether a command for operating the air conditioner according to the environment-related information saved in the memory unit 240 is input (S27).

Assuming that the command for operating the air conditioner according to the saved environment-related information is input (environment-related information is selected), the air conditioner 100 receives the selected environment-related information from the terminal 200, and is operated according to the received environment-related information (S28).

According to the present invention, when the indoor environment of the place where the air conditioner is located is felt desirable, the current environment-related information may be saved, and then the air conditioner may be operated according to the saved indoor environmental information.

Although the terminal acquires the environment-related information in the present invention, the air conditioner itself may acquire the environment-related information and transmit the acquired information to the terminal. The environment-related information may be selected at the terminal, an the air conditioner may be operated according to the selected environment-related information.

A method of the air conditioner acquiring the environment-related information may be the same as a method of the terminal acquiring the environment-related information. However, when the air conditioner is equipped with a GPS module, the air conditioner may acquire the outdoor environmental information of an area where the air conditioner is located. The method of the air conditioner acquiring the environment-related information may include checking a current location of the air conditioner, the air conditioner receiving the environment-related information corresponding to a current location of the portable device.

## Claims

1. A method of controlling a network apparatus, the network apparatus comprising a portable device (200) and an air conditioner (100) capable of communicating with the portable device (200), the method comprising:
acquiring environment-related information;
inputting a command for operating the air conditioner (100) according to the acquired environment-related information; and
operating the air conditioner (100) according to the environment-related information.

2. The method of claim 1, wherein the environment-related information is acquired by the portable device (200).

3. The method of claim 2, wherein the acquiring of the environment-related information comprises:
inputting (S1) an environmental information confirmation command into the portable device (200);
checking (S3) a current location of the portable device (200); and
receiving (S4) environment-related information at the portable device (200) corresponding to the current location of the portable device (200).

4. The method of claim 3, further comprising saving (S6) the environment-related information in a memory unit (240) of the portable device (200),
wherein a plurality of pieces of environment-related information are saved in the memory unit (240), and
a user selects (S7) one of the plurality of pieces of environment-related information.

5. The method of claim 3, wherein the information acquired by the portable device (200) is information about an outdoor environment.

6. The method of claim 2, wherein the acquiring of the environment-related information comprises:
inputting an environmental information confirmation command into the portable device (200);
the portable device (200) accessing (S11) a Web server;
receiving (S12) environment-related information from the Web server; and
saving (S12) the received environment-related information in a memory unit (240) of the portable device (200).

7. The method of claim 6, wherein the information acquired by the portable device (200) is indoor or outdoor environment-related information.

8. The method of claim 2, wherein the acquiring of the environment-related information comprises:
inputting (S21) an environmental information confirmation command into the portable device (200);
sending (S22) an information request from the portable device (200) to the air conditioner (100);
detecting environment-related information at the air conditioner (100);
transmitting (S23) the environment-related information from the air conditioner (100) to the portable device (200); and
saving (S26) the environment-related information in a memory unit (240) of the portable device (200).

9. The method of claim 8, wherein the information acquired by the portable device (200) is information about an indoor environment where the air conditioner (100) is located.

10. The method of claim 3 or 8, wherein the confirmation command is input by capturing a predetermined image with a photographing unit of the portable device (200) after a control program is executed on the portable device (200) for controlling the air conditioner (100).

11. The method of claim 3 or 8, wherein the confirmation command is input by selecting a predetermined button after a control program is executed on the portable device (200) for controlling the air conditioner (100).

12. The method of claim 3 or 8, wherein the environment-related information acquired by the portable device (200) is uploaded to a Web server accessible by the portable device (100).

13. The method of claim 1, wherein the acquiring of the environment-related information is carried out by the air conditioner (100).

14. The method of claim 1, wherein the acquiring of the environment-related information comprises:
checking a current location of the air conditioner (100);
and
receiving environment-related information at the air conditioner (100) corresponding to the current location.

15. The method of claim 1, wherein the environment-related information is indoor or outdoor environmental information or a condition for operating the air conditioner (100) according to the indoor or outdoor environmental condition.
